# FASCICULE DE BREVET EUROPEEN

(11) **EP 2 000 405 B1**
(45) Date de publication et mention de la délivrance du brevet: **01.05.2013**
(21) Numéro de dépôt: 08165087.1
(22) Date de dépôt: 20.03.2008
(51) Int. Cl.: B64C 13/28, F16H 25/20

(54) **Perfectionnements à la détection d'effort sur un actionneur de commande de vol**
Perfektionierungen der Erfassung des Drucks auf ein Stellglied zur Flugsteuerung
Improved load detection on a flight control actuator

(30) Priorité: 23.03.2007 FR 0754003
(43) Date de publication de la demande: 10.12.2008
(62) Demande divisionnaire de: 08102826.8
(73) Titulaire: Goodrich Actuation Systems SAS, 78530 Buc (FR)
(72) Inventeur: Moalic, Jean-Marc, 95210 Saint Gratien (FR); Turpin, Pierre, 78310 Maurepas (FR); Sellier, Philippe, 27150 Etrepagny (FR)
(74) Mandataire: Regimbeau

(56) Documents cités:
- EP-A1- 1 557 588
- FR-A1- 2 858 035
- US-A- 3 695 096

## Description

### DOMAINE TECHNIQUE GENERAL ET ART ANTERIEUR

La présente invention est relative à la détection d'effort sur un actionneur de commande de vol.

Notamment, mais non limitativement, elle concerne la détection de la reprise d'effort par une voie secondaire d'un actionneur de commande de vol d'aéronef et trouve notamment avantageusement application dans le cas d'actionneur de type THSA (« Trimmable Horizontal Stabilizer Actuator »).

On sait que classiquement, de tels actionneurs comportent deux voies mécaniques, l'une primaire, l'autre secondaire, cette dernière étant destinée à reprendre l'effort lorsque la voie primaire est défaillante.

En fonctionnement sur la voie primaire, les efforts transitent par une vis à billes ou à rouleaux creuse. Cette caractéristique permet d'y loger une tige de sécurité (barre dite « fail safe »), rainurée à ses extrémités et reliée avec jeu à la vis. Cette structure assure la continuité de la transmission des efforts et de la rotation de l'ensemble (en évitant une séparation axiale des éléments de la vis, en cas de rupture de la vis elle-même). La vis se termine à une de ses extrémités par une pièce d'attache par laquelle elle est reliée à l'aéronef (attache haute primaire). En cas de défaillance de celle-ci, les efforts sont repris par la tige de sécurité dont l'extrémité est une forme mâle (par exemple une sphère) disposée dans une forme femelle d'une pièce d'attache de la voie secondaire (attache haute secondaire). Cette attache secondaire est elle-même reliée à l'aéronef au moyen d'une pièce d'attache avion différente de celle utilisée pour supporter la voie primaire.

En fonctionnement « normal », lorsque la voie primaire porte effort, il existe un jeu entre la forme mâle qui termine la tige de sécurité et la forme femelle de la pièce d'attache de la voie secondaire, de sorte que la pièce d'attache secondaire avion ne supporte pas d'autre effort que le poids de la pièce d'attache femelle secondaire du THSA.

Lors de la défaillance de la voie primaire, la forme mâle qui termine la vis vient en contact avec la forme femelle de la pièce d'attache de la voie secondaire ce qui entraine la reprise d'effort par la chape de fixation secondaire avion.

On connait déjà, par exemple par FR 2.858.035 ou EP 1.557.588, des dispositifs pour la détection de la reprise d'effort par une voie secondaire.

Toutefois, les solutions proposées à ce jour sont généralement fondées sur une détection du déplacement ou de l'écartement entre différentes pièces.

On souhaite pouvoir proposer des solutions qui permettent d'encore améliorer la fiabilité des détections des mises sous charge des voies secondaires.

On souhaite également pouvoir proposer des solutions d'intégration moins complexe que les solutions précitées à capteurs de détection de déplacement ou d'écartement.

On connaît par ailleurs du document US 3695096 des vis instrumentées présentant un trou axial équipé de jauges de contrainte destinées à permettre d'évaluer en permanence la contrainte supportée par une pièce de jonction.

### PRESENTATION DE L'INVENTION

Un but de l'invention est donc de proposer une solution pour détecter la reprise d'effort, afin notamment d'informer le pilote de ce que la voie secondaire a pris le relais de la voie primaire.

Un autre but de l'invention est en particulier de résoudre cette problématique de détection d'une façon simple et efficace,

Un autre but encore de l'invention est de proposer une solution permettant d'éviter toute détection intempestive, et ce alors même que l'actionneur doit pouvoir être soumis à des environnements extérieurs sévères, notamment mécaniques, chimiques, climatiques ou électriques.

Un autre but encore de l'invention est de proposer une solution particulièrement simple en terme d'intégration.

Plus particulièrement, l'invention propose un système de fixation de l'attache haute d'un actionneur de commande de vol selon la revendication 1.

Ainsi, on détecte les contraintes sur les pièces assurant l'attache haute de la voie secondaire pour mettre en évidence une reprise d'effort par la voie secondaire.

Une telle solution a l'avantage d'être fiable et peu compliquée à implémenter,

Par ailleurs, dans un mode de réalisation qui ne se veut pas limitatif, un capteur apte à détecter un effort est disposé sur au moins une vis de fixation assurant l'attache haute de la voie secondaire et/ou sur une bague rapportée sur celle-ci. On notera qu'un avantage important de cette solution est qu'elle s'intègre aisément sur des équipements existants, sans nécessiter de modifications substantielles sur ceux-ci (il suffit pour l'essentiel de changer la vis ou l'ensemble vis/bague) et en particulier sans modification des chapes de fixation de l'avion et de l'actionneur.

Le capteur apte à détecter un effort peut comporter une ou plusieurs jauges extenso-métriques, ces jauges étant aptes à se déformer sous l'effet de la contrainte générée lorsque la voie secondaire est chargée et reprend l'effort.

En particulier, il peut être prévu au moins deux ou trois membranes à jauges de contrainte disposées sur le diamètre extérieur de la vis à 180° ou à 120° respectivement et au droit du trou d'une chape de la pièce d'attache dans lequel elle est reçue, ledit montage présentant au niveau du trou de la chape une pièce du type bague avec éléments en saillie aptes à mettre en contrainte une ou plusieurs des membranes au moins dans certaines configurations de mise sous charge.

Une alternative consiste en ce que les membranes comportent un élément en saillie apte à être mis en contact par la chape pour une ou plusieurs des membranes au moins dans certaines configurations de mise sous charge.

Un dispositif de type boite à ressort pourra être ajouté sur la vis de manière à rendre indépendant la mise sous charge des membranes de l'effort couple de serrage appliqué à la vis lors du montage.

Sur un ensemble comportant deux vis équipées on pourra au moyen d'un boitier électronique traiter l'un ou les deux signaux de manière quantitative ainsi que relative cela pour fiabiliser la pertinence de la mesure.

Dans une autre variante de réalisation, il est prévu de remplacer le dispositif à jauges de contraintes par des moyens pour exciter en vibration la vis de fixation de l'attache haute de la voie secondaire, et/ou une bague rapportée sur celle-ci, des moyens pour relever les vibrations ainsi générées et des moyens de traitement pour détecter un changement de la réponse en fréquence de la pièce excitée.

Il peut également être prévu qu'une pièce d'attache comporte une bague déformable, solidaire ou non de l'axe, et qui présente au moins un capteur de pression remplace le dispositif à jauges de contraintes.

L'invention concerne également l'utilisation d'au moins une vis de fixation qui comporte des moyens formant capteur apte à détecter un effort ou d'un ensemble composé d'une vis de fixation et d'une bague comportant de tels moyens, pour la fixation de l'attache haute de la voie secondaire d'un actionneur de commande de vol.

Le système de fixation de l'attache haute de l'actionneur de commande de vol est en outre avantageusement complété par les différentes caractéristiques des revendications 2 à 9.

### PRESENTATION DES FIGURES

D'autres caractéristiques et avantages de l'invention ressortiront encore de la description qui suit, laquelle est purement illustrative et non limitative, et doit être lue en regard des dessins annexés sur lesquels :
- la figure 1 est une représentation schématique illustrant le principe d'un actionneur ;
- les figures 2a à 2c sont des représentations schématiques en vue de côté et en coupe illustrant la fixation de l'attache haute de la voie secondaire ;
- les figures 3a et 3b illustrent un mode de réalisation possible pour les moyens de détection disposés au niveau des pièces participant à l'attache haute telle qu'illustrées sur les figures 2a à 2c ;
- les figures 4a et 4b sont des représentations schématiques en coupe illustrant un autre mode de réalisation possible ;
- la figure 5 est une représentation schématique en perspective du mode de réalisation des figures 4a et 4b ;
- la figure 6 est une représentation schématique en coupe illustrant une autre mode de réalisation encore possible ;
- la figure 7 illustre un autre mode de réalisation encore ;
- la figure 8 illustre également une autre variante possible ;
- la figure 9, enfin, représente schématiquement un montage d'alimentation électrique et de traitement auquel sont reliés les capteurs associés à deux vis équipées du type de celles décrites en référence aux figures précédentes.

### DESCRIPTION D'UN OU PLUSIEURS EXEMPLES DE REALISATION

### STRUCTURE GENERALE DE L'ACTIONNEUR

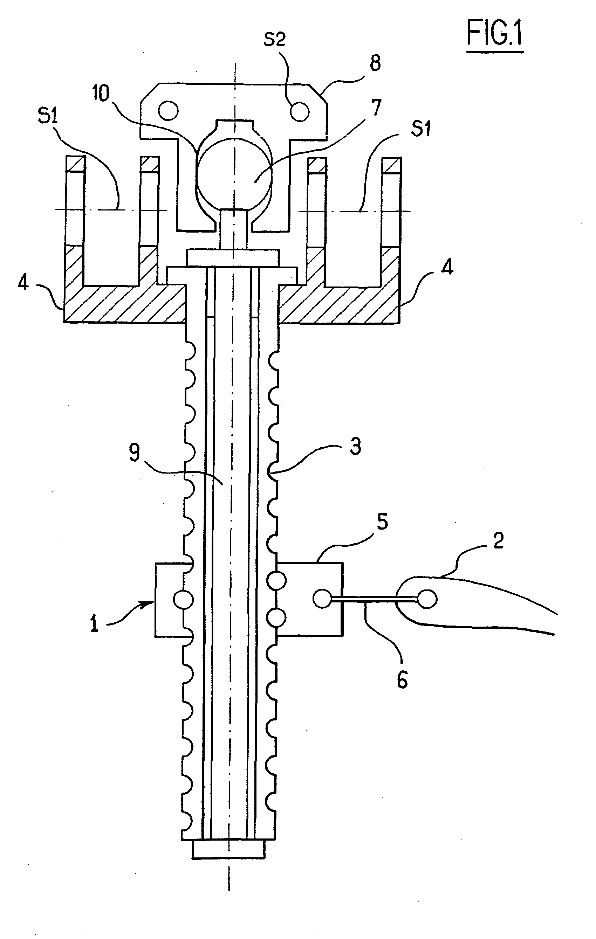

On a représenté schématiquement sur la figure 1 un actionneur 1 de commande de vol avec une voie primaire et une voie secondaire.

Cet actionneur 1 est par exemple un vérin de type THSA, pour la commande d'un plan 2 horizontal variable d'aéronef.

Il comporte une voie primaire qui comprend une vis creuse 3 reliée à une extrémité, par un système à cardan 4, à la structure S1 de l'avion. La voie primaire comprend également un écrou 5, qui coopère avec la vis 3 en étant monté sur celle-ci et qui est relié au plan 2 à commander, par exemple par un autre système à cardan 6.

Une tige de sécurité 9 s'étend à l'intérieur de la vis creuse 3. Cette tige 9 se termine par une tête 7 sphérique placée avec jeu à l'intérieur d'une forme sphérique femelle 10 d'une pièce d'attache 8 de la voie secondaire, cette pièce d'attache 8 étant elle-même fixée à une structure S2 de l'avion.

Cet actionneur est par exemple commandé par un moteur hydraulique ou électrique M, qui entraîne la vis 3 en rotation et déplace l'écrou 5 en translation, ce dernier étant à cet effet bloqué en rotation. Le déplacement en translation de l'écrou 5 permet ainsi de commander le basculement que l'on souhaite donner au plan horizontal variable 2.

### FIXATION DE L'ATTACHE HAUTE SECONDAIRE

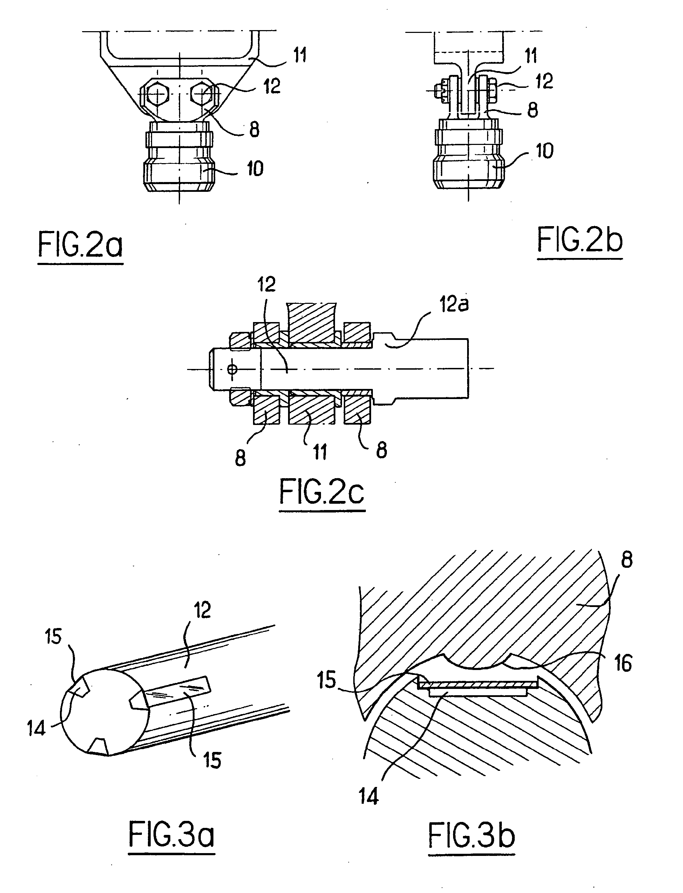

On a représenté sur les figures 2a, 2b et 2c la fixation de la pièce d'attache 8 de la voie secondaire sur une chape 11 supérieure de fixation de la structure S2 de l'avion.

Ainsi qu'on peut le voir sur ces figures, la pièce 8 est un étrier qui comporte deux chapes entre lesquelles est reçue la chape 11. Deux vis 12 parallèles s'étendent à travers les chapes de la pièce 8 et la pièce 11, l'ensemble étant fixé par serrage entre des têtes 12a qui terminent les vis 12 à une extrémité et des écrous 13 dont le filetage coopère avec celui des vis 12 à leurs autres extrémités.

### DETECTION DE LA MISE SOUS CHARGE

Des moyens de détection apte à détecter un effort sont disposés sur au moins l'une des vis 12 ou au moins l'une des deux chapes de la pièce 8 pour détecter la reprise d'effort par la voie secondaire.

Les figures 3a et 3b illustrent une solution dans laquelle l'une des vis 12 présente au droit d'une des chapes de la pièce d'attache 8 plusieurs rainures 14 en creux au niveau desquels s'étendent des lames souples 15 porteuses de jauges de contrainte.

La chape correspondante de la pièce d'attache 8 comporte quant à elle un certain nombre de poinçons 16 en saillie qui, lorsque l'effort est supporté par la voie secondaire et que la pièce d'attache 8, la chape 11 et les vis 12 sont en charge soit en compression, soit en traction, viennent en appui sur la vis et déforment les lames 15 à jauges de contrainte.

Les lames à jauges de contraintes sont par exemple réparties régulièrement sur la périphérie de la vis 12. Elles peuvent être au nombre de deux, réparties de façon diamétralement opposées, c'est-à-dire à 180° l'un de l'autre sur une même périphérie de la vis 12. Elles peuvent également être au nombre de trois (réparties à 120° les unes des autres sur la vis), voire être en un nombre plus important de façon à pouvoir détecter des efforts qui ne seraient pas uniquement des efforts en compression ou traction, mais qui seraient dirigés avec un certain angle par rapport à la direction principale de traction/compression. On notera en particulier qu'une configuration à trois jauges de contrainte ou plus permet de récupérer un signal de mise sous charge quelle que soit la direction dans laquelle cette mise sous charge intervient.

Les poinçons 16 ont quant à eux la même répartition que les lames à jauges de contrainte.

Les lames à jauges de contrainte sont par exemple des membranes souples en feuillard d'acier inoxydable sur lesquelles les jauges de contrainte sont collées ou déposées.

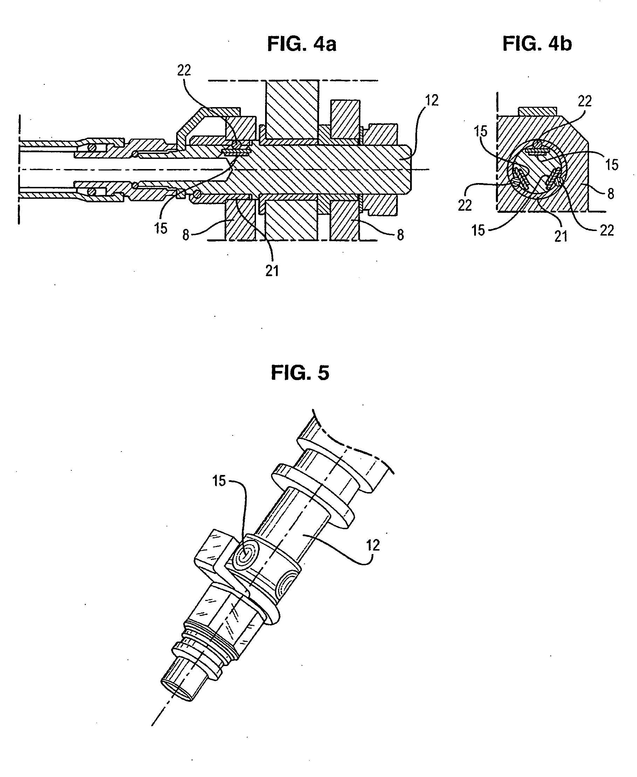

Les figures 4a, 4b et 5 illustrent un autre mode de réalisation dans lequel il est prévu trois jauges 15 de type à membranes réparties à 120° les unes des autres sur une périphérie de la vis 12. Dans ce mode de réalisation, les chapes de la pièce d'attache 8 ne comportent pas de poinçon, mais il est prévu au niveau du trou de la chape, entre la chape et la vis, une bague 21 qui intègre trois billes 22 au droit des membranes qui constituent les jauges 15.

D'autres solutions de détection d'efforts au niveau de l'attache haute secondaire sont envisageables.

Notamment, en variante, les lames à jauges de contrainte peuvent être intégrées non pas à la vis mais à des bagues interposées entre la vis et les chapes et/ou l'écrou.

Une alternative encore consiste en ce que les membranes comportent un élément en saillie apte à être mis en contact par la chape pour une ou plusieurs des membranes au moins dans certaines configurations de mise sous charge.

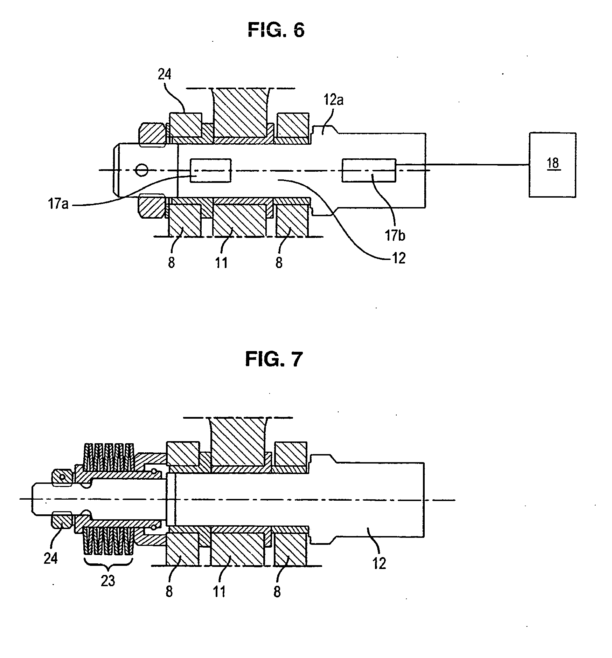

La figure 6 illustre une autre solution de détection d'effort encore.

Dans cette variante dans laquelle deux lames piézo-électriques 17a, 17b sont positionnées sur l'une des vis 12. La lame 17a est utilisée pour exciter la vis 12 en la faisant vibrer autour de sa ou ses fréquences de résonance. La lame 17b joue le rôle de transducteur et relève les vibrations de la vis 12.

On comprend que selon que l'attache haute de la voie secondaire est ou non en charge, la réponse en vibration, et notamment la fréquence de résonnance de la vis 12, change.

Un traitement de la réponse en fréquence telle que mesurée par la lame 17b, mettant en oeuvre par exemple des filtrages autour des fréquences de résonance de la vis 12 selon qu'elle est ou non en charge, permet de détecter la mise en charge ou non de la voie secondaire.

Ce traitement est par exemple mis en oeuvre par un calculateur 18 qui pourra également tenir compte d'autres paramètres externes pour ajuster ces filtrages : température notamment.

Ce calculateur 18 est lui-même relié à un élément de type interrupteur qu'il bascule pour mettre en circuit ouvert ou à la masse le circuit de détection de défaillance de commande de vol de l'aéronef.

En variante, les lames piézo-électriques 17a, 17b peuvent être intégrées non pas à la vis mais à des bagues interposées entre la vis et les chapes et/ou l'écrou.

Elles peuvent également être disposées sur d'autres pièces participant à l'attache haute de la voie secondaire : pièce d'attache 8 ou chape 11 par exemple.

On notera que des solution à jauges de contrainte du type de celles qui viennent d'être décrites ont l'avantage de permettre de ne pas affaiblir le montage de fixation de l'attache haute secondaire - lequel doit être capable de supporter des efforts de une à plusieurs dizaines de Tonnes, tout en permettant la détection d'efforts de l'ordre de une à plusieurs dizaines de Kg.

Par ailleurs, en complément des différentes variantes qui viennent d'être décrites et ainsi qu'illustré sur la figure 7, on interpose avantageusement entre l'écrou 24 associé à la vis 12 et la chape de la pièce 8 qu'il vient serrer un ensemble (ou boitier) ressort 23. Ce boitier ressort 23 permet de répartir l'effort de serrage et rend indépendant la mise sous charge des jauges de l'effort couple de serrage appliqué à la vis lors du montage. On évite ainsi des fausses détections dues aux conditions de montage.

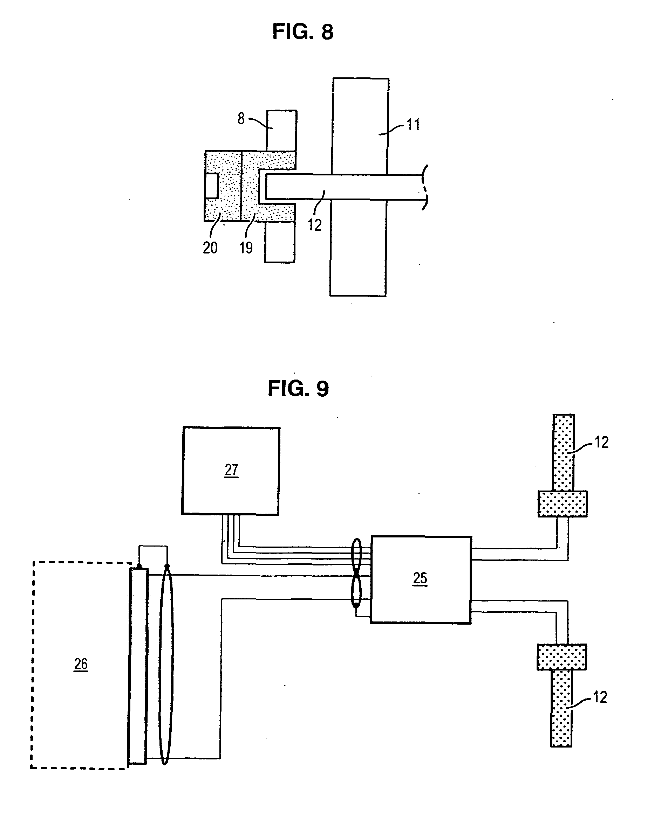

En variante encore, ainsi qu'illustré sur la figure 8, on peut prévoir d'équiper l'une des chapes de la pièce d'attache 8 d'une bague 19 constituée par une enveloppe remplie de silicone et intégrant un ou plusieurs capteurs de pression 20, par exemple du type à pont de silicium.

Lors de la mise en charge de la voie secondaire, la vis 12 supportant l'effort mettra en charge la bague 19. Le changement de pression sera alors détecté par le capteur 20 équipant la bague 19.

Egalement, on peut envisager d'équiper soit une seule vis, soit les deux vis 12, soit encore la chape 11 ou la pièce d'attache 8, et de façon plus générale de multiplier les différentes mesures réalisées par différents moyens de détection, de façon à disposer d'un système redondant et le cas échéant travailler en différentiel.

La figure 9 explicite quant à elle un montage possible avec deux vis de fixation 12 équipées de capteurs du type de celles proposées dans les figures précédentes.

Dans ce montage, les capteurs des vis 12 sont reliés à un boitier électronique 25 (qui intègre par exemple le calculateur 18 évoqué précédemment en référence à la figure 6). Ce boitier électronique 25 reçoit une alimentation électrique d'une source 26. Il met en oeuvre un premier traitement sur les mesures des capteurs et renvoie des informations, par exemple numériques, à un calculateur 27 de l'aéronef.

Ce boitier 25 peut par exemple mettre en oeuvre sur les signaux qu'il reçoit des capteurs d'effort des deux vis, des tests de cohérence qualitative ou quantitative.

Comme on l'aura compris, les solutions qui viennent d'être décrites ont l'avantage d'être simple et d'une grande fiabilité.

En outre, la détection grâce à des capteurs apte à détecter un effort sur les vis de fixation ou des bagues associées a l'avantage d'être d'une grande facilité d'implémentation.

Elle peut notamment être mise en place sur des actionneurs existants, sans nécessiter de modifications substantielles sur ceux-ci.

On notera enfin que s'agissant des solutions où les jauges sont portées par des vis de fixation, celles-ci ont le grand avantage d'être faciles à mettre en place sur des actionneurs déjà en service, notamment dans le cadre d'un réfrofit, puisqu'il suffit pour cela de remplacer les vis de fixation de l'actionneur par des vis équipées de jauges.

Enfin, l'invention a été décrite ici dans le cas de la détection de la reprise d'effort par la voie secondaire d'un actionneur de commande de vol, notamment d'un actionneur THSA.

Toutefois l'utilisation de vis équipées du type de celles qui viennent d'être décrites, trouvent avantageusement application plus largement dans le cadre de la détection d'effort sur toute fixation d'attache.

## Revendications

1. Ensemble de détection comprenant :
- un actionneur (1) de commande de vol présentant
une voie primaire et une voie secondaire apte à reprendre l'effort de la voie primaire en cas de défaillance de celle-ci, la voie primaire comportant une vis (3), la voie secondaire comportant une tige (9) de sécurité de reprise d'effort traversant la vis,
une pièce d'attache de la voie primaire terminant la vis (3) de celle-ci, une pièce d'attache (8) de la voie secondaire dont une forme femelle (10) reçoit, avec jeu lorsque la voie primaire porte l'effort, une forme mâle (7) qui termine la tige de sécurité de reprise d'effort, la forme mâle (7) qui termine la tige (9) et la forme femelle (10) de la pièce d'attache (8) de la voie secondaire étant sphériques ou de révolution,
- une chape (11) de fixation,
étant liée à la pièce d'attache (8) de la voie secondaire,
et étant apte à être liée à la structure (S2) d'un aéronef,
- des moyens de détection de mise sous charge de la voie secondaire de l'actionneur de commande de vol lors d'une rupture de la voie primaire, **caractérisé en ce que**
lesdits moyens de détection de mise sous charge de la voie secondaire comprennent au moins un capteur apte à détecter un effort (17a, 17b),
ledit capteur étant disposé sur la chape (11) de fixation, pour détecter un effort sur la chape (11) et ainsi détecter sa mise sous charge.

2. Ensemble selon la revendication 1, **caractérisé en ce que** le capteur apte à détecter un effort comporte des moyens (17a) pour exciter en vibration la chape (11) de fixation de l'aéronef, des moyens (17b) pour relever les vibrations ainsi générées sur cette chape (11) et des moyens de traitement pour détecter un changement de la réponse en fréquence de la chape excitée.

3. Ensemble selon l'une des revendications 1 ou 2, **caractérisé en ce qu'**il comporte en outre un capteur apte à détecter un effort comprenant :
des moyens (17a) pour exciter en vibration la pièce d'attache (8) de la voie secondaire,
des moyens (17b) pour relever les vibrations ainsi générées sur cette pièce d'attache (8), et
des moyens de traitement pour détecter un changement de la réponse en fréquence de ladite pièce d'attache (8) excitée.

4. Ensemble selon l'une des revendications 2 ou 3, **caractérisé en ce que** les moyens d'excitation (17a) et les moyens (17b) pour relever les vibrations sont de type piézo-électriques.

5. Ensemble selon l'une des revendications 1 à 4, **caractérisé en ce que** la pièce d'attache (8) comporte au moins un capteur de pression.

6. Ensemble selon l'une des revendications 1 à 5, **caractérisé en ce que**, la pièce d'attache (8) de la voie secondaire comprenant des chapes, au moins l'une de ces chapes comporte une bague (19) déformable qui présente au moins un capteur de pression (20).

7. Ensemble selon l'une des revendications 5 ou 6, **caractérisé en ce que** le capteur de pression est du type pont à silicium.

8. Ensemble selon l'une des revendications 6 ou 7, **caractérisé en ce que** la bague déformable (19) comprend une enveloppe remplie d'un matériau, par exemple de type huile silicone.

9. Ensemble selon l'une des revendications 1 à 8, **caractérisé en ce qu'**il comporte plusieurs moyens de détection de mise sous charge de la voie secondaire disposés sur une ou plusieurs des pièces parmi la pièce d'attache (8) de la voie secondaire, la chape de fixation (11) de l'aéronef et des moyens de fixation réalisant la fixation de ladite pièce d'attache à ladite chape, pour assurer des mesures redondantes ou complémentaires.

## Claims

1. A detection assembly comprising:
- a flight-control actuator (1) having
. a primary path and a secondary path that is designed to take up the effort of the primary path in the event of failure of the latter, the primary path including a screw (3), the secondary path including an effort take-up security rod (9) passing through the screw;
. an attachment part of the primary path terminating the screw (3) thereof;
. an attachment part (8) of the secondary path of which a female shape (10), leaving clearance when the primary path carries the effort, receives a male shape (7) which terminates the effort take-up security rod (9), the male shape (7) which terminates the rod (9) and the female shape (10) of the attachment part (8) of the secondary path being spherical or of revolution;
- a securing yoke (11),
. being connected to the attachment part (8) of the secondary path,
. and able to be connected to the structure (S2) of an aircraft;
- means to detect loading of the secondary path of the flight-control actuator in the event of break in the primary path,
**characterised in that**:
the said means to detect loading of the secondary path comprise at least one sensor (17a, 17b),capable of detecting effort,
the said sensor being arranged on the securing yoke (11) to detect effort on the yoke (11) and thereby detect the loading thereof.

2. The assembly according to claim 1, **characterised in that** the sensor capable of detecting effort comprises means (17a) for vibratory excitation of the securing yoke (11) of the aircraft, means (17b) for recording the vibrations thus generated on this yoke (11) and processing means to detect a change in the frequency response of the excited yoke.

3. The assembly according to one of claims 1 or 2, **characterised in that** it also comprises a sensor capable of detecting an effort comprising:
- means (17a) for vibratory excitation of the attachment part (8) of the secondary path;
- means (17b) for recording the vibrations thus generated on this attachment part (8); and
- processing means to detect a change in frequency response of said excited attachment part (8).

4. The assembly according to one of claims 2 or 3, **characterised in that** the excitation means (17a) and the means (17b) for recording the vibrations are of piezo-electric type.

5. The assembly according to one of claims 1 to 4, **characterised in that** the attachment part (8) comprises at least one pressure sensor.

6. The assembly according to one of claims 1 to 5, **characterised in that** the attachment part (8) of the secondary path comprising yokes, at least one of these yokes comprises a deformable ring (19) which has at least one pressure sensor (20).

7. The assembly according to one of claims 5 or 6 **characterised in that** the pressure sensor is of silicon bridge type.

8. The assembly according to one of claims 6 or 7, **characterised in that** the deformable ring (19) comprises a jacket filled with a material e.g. of silicone oil type.

9. The assembly according to one of claims 1 to 8, **characterised in that** it comprises several means for detecting loading of the secondary path arranged on one or more parts from among the attachment part (8) of the secondary path, the securing yoke (11) of the aircraft and securing means securing the said attachment part to the said yoke, to ensure redundant or additional measurements.

## Patentansprüche

1. Detektionseinheit, Folgendes umfassend:
- ein Stellglied (1) zur Flugsteuerung, Folgendes umfassend:
einen primären Weg und einen sekundären Weg, der dafür eingerichtet ist, die Kraft von dem primären Weg zu übernehmen, wenn dieser ausfällt, wobei der primäre Weg eine Schraube (3) umfasst und der sekundäre Weg einen Sicherheitsstift (9) zur Kraftübernahme umfasst, der die Schraube durchzieht,
ein Verbindungsteil des primären Wegs, das sich am Ende von dessen Schraube (3) befindet,
ein Verbindungsteil (8) des sekundären Wegs, von dem eine weibliche Form (10) eine männliche Form (7), die sich am Ende des Sicherheitsstifts zur Kraftübernahme befindet, aufnimmt, und dies mit Spiel, wenn der primäre Weg die Kraft aufnimmt, wobei die männliche Form (7), die sich am Ende des Stifts (9) befindet, und die weibliche Form (10) des Verbindungsteils (8) des sekundären Wegs kugelförmig oder rotationssymmetrisch sind,
- einen Befestigungskopf (11),
der mit dem Verbindungsteil (8) des sekundären Wegs gekoppelt ist,
und der dafür eingerichtet ist, mit der Struktur (S2) eines Luftfahrzeugs gekoppelt zu werden,
- ein Mittel zum Erfassen der Belastung des sekundären Wegs des Stellglieds zur Flugsteuerung bei einem Brechen des primären Wegs,
**dadurch gekennzeichnet, dass**
das Mittel zum Erfassen der Belastung des sekundären Wegs wenigstens einen Sensor (17a, 17b) umfasst, der dafür eingerichtet ist, eine Belastungskraft zu erfassen, wobei der Sensor am Befestigungskopf (11) angeordnet ist, um eine Kraft auf den Kopf (11) zu erfassen und dadurch eine Belastungsausübung auf ihn zu erfassen.

2. Einheit nach Anspruch 1, **dadurch gekennzeichnet, dass** der Sensor, der dafür eingerichtet ist, eine Belastungskraft zu erfassen, Folgendes umfasst: ein Mittel (17a), um an dem Befestigungskopf (11) des Luftfahrzeugs Vibrationen anzuregen, ein Mittel (17b), um die so an diesem Kopf (11) erzeugten Vibrationen zu erfassen, und ein Verarbeitungsmittel, um eine Veränderung in der Frequenzantwort des angeregten Kopfs zu erfassen.

3. Einheit nach einem der Ansprüche 1 oder 2, **dadurch gekennzeichnet, dass** sie außerdem einen Sensor umfasst, der dafür eingerichtet ist, eine Belastungskraft zu erfassen, und der Folgendes umfasst:
ein Mittel (17a), um an dem Verbindungsteil (8) des sekundären Wegs Vibrationen anzuregen,
ein Mittel (17b), um die so an diesem Verbindungsteil (8) erzeugten Vibrationen zu erfassen, und
ein Verarbeitungsmittel, um eine Veränderung in der Frequenzantwort des angeregten Verbindungsteils (8) zu erfassen.

4. Einheit nach einem der Ansprüche 2 oder 3, **dadurch gekennzeichnet, dass** das Anregungsmittel (17a) und das Mittel (17b) zum Erfassen der Vibrationen vom piezoelektrischen Typ sind.

5. Einheit nach einem der Ansprüche 1 bis 4, **dadurch gekennzeichnet, dass** das Verbindungsteil (8) wenigstens einen Drucksensor umfasst.

6. Einheit nach einem der Ansprüche 1 bis 5, **dadurch gekennzeichnet, dass** das Verbindungsteil (8) des sekundären Wegs Kappen umfasst, wobei wenigstens eine der Kappen einen verformbaren Ring (19) umfasst, der wenigstens einen Drucksensor (20) aufweist.

7. Einheit nach einem der Ansprüche 5 oder 6, **dadurch gekennzeichnet, dass** der Drucksensor vom Siliziumbrücken-Typ ist.

8. Einheit nach einem der Ansprüche 6 oder 7, **dadurch gekennzeichnet, dass** der verformbare Ring (19) eine Hülle umfasst, die mit einem Material, beispielsweise vom Silikonöl-Typ, aufgefüllt ist.

9. Einheit nach einem der Ansprüche 1 bis 8, **dadurch gekennzeichnet, dass** sie mehrere Mittel zum Erfassen der Belastung des sekundären Wegs umfasst, die zur Sicherstellung redundanter oder komplementärer Messungen an einem oder mehreren der folgenden Teile angeordnet sind: dem Verbindungsteil (8) des sekundären Wegs, dem Befestigungskopf (11) des Luftfahrzeugs und einem Befestigungsmittel, das die Befestigung des Verbindungsteils am Kopf realisiert.
